# NOUVEAU FASCICULE DE BREVET EUROPEEN

(11) **EP 1 802 462 B2**
(45) Date de publication et mention de la décision concernant l'opposition: **30.05.2018**
(45) Mention de la délivrance du brevet: 05.03.2014
(21) Numéro de dépôt: 05809104.2
(22) Date de dépôt: 13.10.2005
(51) Int. Cl.: B32B 27/32

(54) **FILM D EMBALLAGE MULTICOUCHE METALLOPLASTIQUE**
MEHRSCHICHTIGE METALLOPLASTISCHE VERPACKUNGSFOLIE
METALLOPLASTIC MULTILAYERED PACKAGING FILM

(30) Priorité: 19.10.2004 FR 0411035
(43) Date de publication de la demande: 04.07.2007
(73) Titulaire: Amcor Flexibles Sélestat SAS, 92052 Paris la Défense CEDEX (FR)
(72) Inventeur: GRAYER, Alain, F-67230 Witternheim (FR); BOIRON, Guy, F-68000 Wintzenheim (FR); PERIAL, Olivier, F-67600 Orschwiller (FR)
(74) Mandataire: Gernet, Samuel Andreas
(86) Numéro de dépôt international: PCT/FR2005/002532
(87) Numéro de publication internationale: WO 2006/042940

(56) Documents cités:
- EP-A- 0 457 629
- EP-A2- 0 408 268
- EP-A2- 1 419 976
- EP-B1- 1 802 462
- WO-A1-01//17772
- WO-A1-05//15228
- WO-A1-03//066324
- DE-A1- 2 237 071
- DE-A1- 3 113 428
- DE-A1- 3 910 820
- DE-A1- 10 200 925
- JP-A1- H9 024 960
- US-A- 4 424 254
- US-A- 4 567 112
- US-B1- 6 207 271

## Description

### DOMAINE DE L'INVENTION

L'invention concerne le domaine des films d'emballage souples du type des films multicouches métalloplastiques.
Elle concerne plus spécifiquement un film d'emballage avec un film de support comprenant un film d'aluminium et une couche de fixation permettant dans un premier temps de solidariser ledit film sur un support, puis, dans un second temps, de pouvoir séparer par pelage ledit film dudit support.

### ETAT DE LA TECHNIQUE

On trouve dans le commerce des films d'emballage de ce type comprenant un film d'aluminium de 60 à 70 µm d'épaisseur recouvert d'une couche de vernis de scellage, et servant à former des opercules stérilisables et pelables destinés à obturer un récipient métallique ou en matière plastique.

On trouve aussi dans le commerce des films d'emballage comprenant un film d'aluminium de 90 µm d'épaisseur recouvert d'un film de scellage solidarisé au film d'aluminium par une couche de colle. Un tel film d'emballage sert à fabriquer des barquettes stérilisables fermées par des opercules thermoscellés audit film de scellage, aptes à être pelés.

### PROBLEMES POSES

D'une part, il y a une recherche permanente pour diminuer le coût de fabrication des films d'emballage, à propriétés constantes s'entend.
D'autre part, dans le cas des films multicouches métalloplastiques, le coût de la couche de métal, typiquement la couche d'aluminium représente une part importante du coût total, de sorte que des tentatives ont déjà été faites pour réduire l'épaisseur de la couche d'aluminium, mais cela s'est traduit par une dégradation des performances mécaniques. Par ailleurs, des contraintes d'ordre réglementaire de plus en plus sévères se font jour en matière d'utilisation de solvants dans les ateliers de production, ou de teneur limite en solvant résiduel dans les films d'emballage.
Par ailleurs, il est toujours recherché des films d'emballage qui permettent simultanément une adhésion forte dudit film sur ledit support, de manière à pouvoir par exemple résister aux conditions sévères de température et de pression d'une stérilisation, et une grande facilité ou douceur de pelage lors d'une première ouverture d'un récipient comprenant ledit film et ledit support, ces deux exigences étant dans une large mesure contradictoires.
Par ailleurs, d'autres problèmes spécifiques peuvent apparaître en fonction de l'usage final dudit film, en particulier selon qu'il s'agit de former des opercules ou matériau d'operculage destinés à rester plats, ou qu'il s'agit de former des barquettes par emboutissage ou déformation profonde dudit film plan.

Le film d'emballage selon l'invention vise à résoudre ces problèmes.

### DESCRIPTION DE L'INVENTION

Selon l'invention, le film d'emballage comprend les charactéristiques décrites dans la revendication 1.

Cette combinaison de moyens résout les problèmes posés.
En effet, la demanderesse a eu la surprise d'observer qu'il y avait une possibilité de diminuer très significativement l'épaisseur d'aluminium d'un film d'emballage métalloplastique en remplaçant un film unique d'épaisseur E par deux films d'aluminium un dit extérieur d'épaisseur E_{E} et un dit intérieur d'épaisseur E_{I} tel que l'on ait E_{E} + E_{I} < E, et cela sans diminution des propriétés mécaniques du film.
Typiquement, il a été ainsi possible de diminuer d'au moins 10 % l'épaisseur en aluminium.
Cette épaisseur en aluminium varie bien sûr avec l'utilisation finale dudit film selon l'invention : elle est plus élevée dans le cas d'un film destiné à former des barquettes embouties que dans le cas d'un film destiné à former des opercules. En outre, le film selon l'invention comprend une couche de fixation formée par co-extrusion, c'est-à-dire formée sans solvants, ce qui présente des avantages tant du point de vue du film lui-même que de sa fabrication, compte tenu des exigences réglementaires déjà évoquées.
Enfin, la demanderesse a eu la surprise de constater que cette couche de fixation co-extrudée permettait d'avoir d'abord des opercules thermoscellés notamment sur des récipients standards ou des barquettes obturées par thermoscellage d'opercules standards ou obtenus à partir d'un film selon l'invention, aptes à former des récipients présentant une force de scellage assez élevée pour résister aux conditions de stérilisation habituelles, et d'avoir ensuite notamment une douceur de pelage totalement inattendue.

### DESCRIPTION DES FIGURES

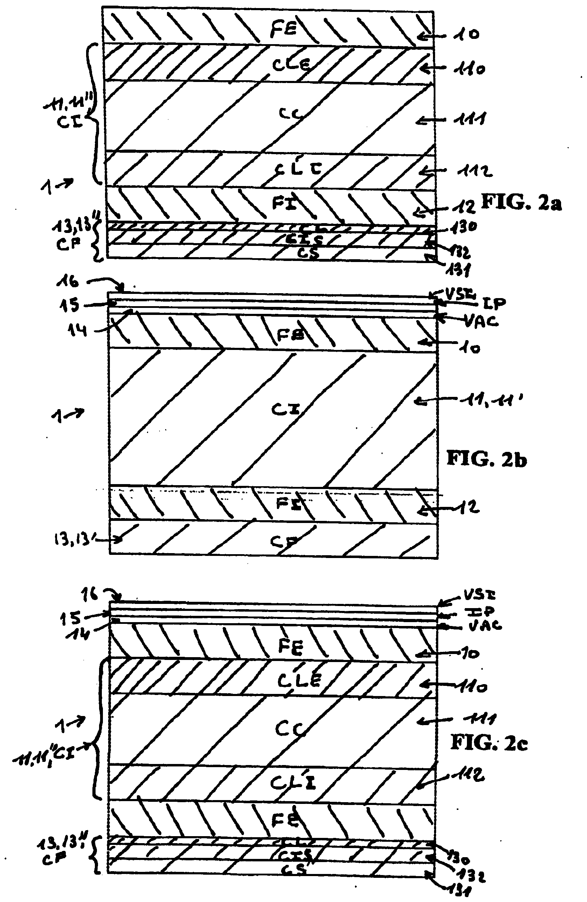

Les figures 2a, 2c, 3a, 4a à 7d et 10a à 10b sont relatives à l'invention.

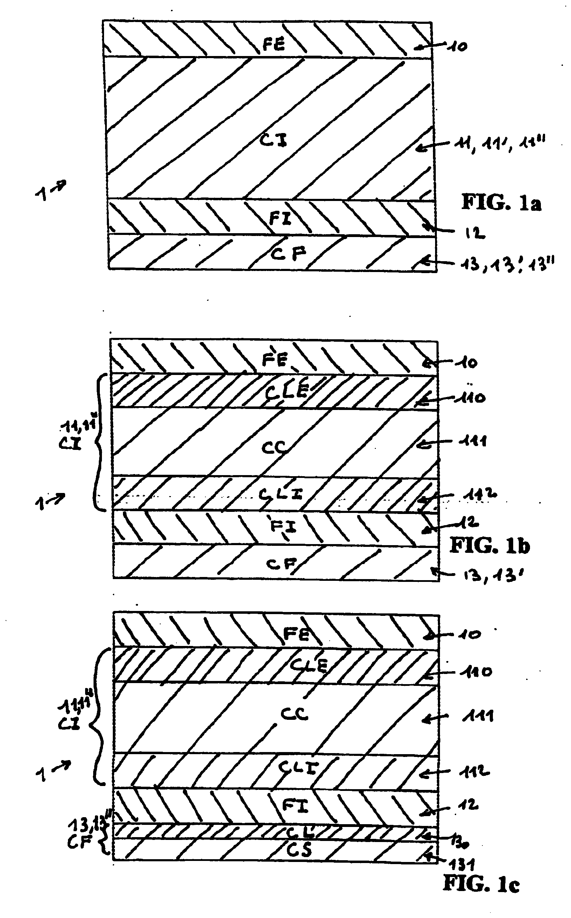

Les figures 1a à 2c sont des coupes de films d'emballage (1), perpendiculairement au plan dudit film (1), destinées à représenter schématiquement quelques exemples de structure multicouche de ces films (1). Dans ces coupes, l'extérieur dudit film (1) forme la partie supérieure du film et l'intérieur du film (1) forme la partie inférieure du film.

La figure la représente le film (1) comprenant, de l'extérieur vers l'intérieur, la succession de couches suivantes :
- ledit film extérieur d'aluminium FE (10),
- ladite couche intermédiaire CI (11),
- ledit film intérieur d'aluminium FI (12),
- et ladite couche de fixation CF (13).
La structure de ce film peut être représentée symboliquement par FE / CI/FI/CF, la couche la plus extérieure FE étant à gauche et la couche la plus intérieure CF étant à droite.

La structure du film de la figure 1b se distingue de celle de la figure 1 a en ce que ladite couche intermédiaire CI (11) comprend trois couches:
- une couche de liaison extérieure CLI(110),
- une couche centrale CC (111).
- et une couche de liaison intérieure CLE (112).
La structure du film de la figure 1b peut être donc représentée symboliquement par FE / CLE / CC / CLI / FI /CF.

La structure du film de la figure 1c se distingue de celle de la figure 1b en ce que ladite couche de fixation CF (13) comprend deux couches:
- une couche de liaison CL (130) avec ledit film intérieur d'aluminium FI (12),
- une couche de scellage CS (131).

La structure du film de la figure 1c peut être donc représentée symboliquement par FE / CLE / CC / CLI / FI / CL / CS.

La structure du film de la figure 2a se distingue de celle de la figure 1c en ce qu'elle comprend une couche intermédiaire de scellage CIS (132) entre ladite couche de liaison CL (130) et ladite couche de scellage CS (131).
La structure du film de la figure 2a peut être donc représentée symboliquement par FE / CLE / CC / CLI / FI / CL / CIS / CS.

La structure du film de la figure 2b se distingue de celle de la figure 1a en ce qu'elle comprend, sur ledit film extérieur d'aluminium FE (10), de l'extérieur vers l'intérieur :
- un vernis de surimpression VSI (16),
- une impression IP (15),
- et une couche de primaire ou de vernis d'accrochage VAC (14).
La structure de ce film peut être représentée symboliquement par VSI / IP / VAC / FE / CI / FI / CF.

La structure du film de la figure 2c réunit toutes les couches des figures 2a et 2b.
La structure de ce film peut être représentée symboliquement par VSI / IP / VAC / FE / CI/FI/CL/CIS/CS.

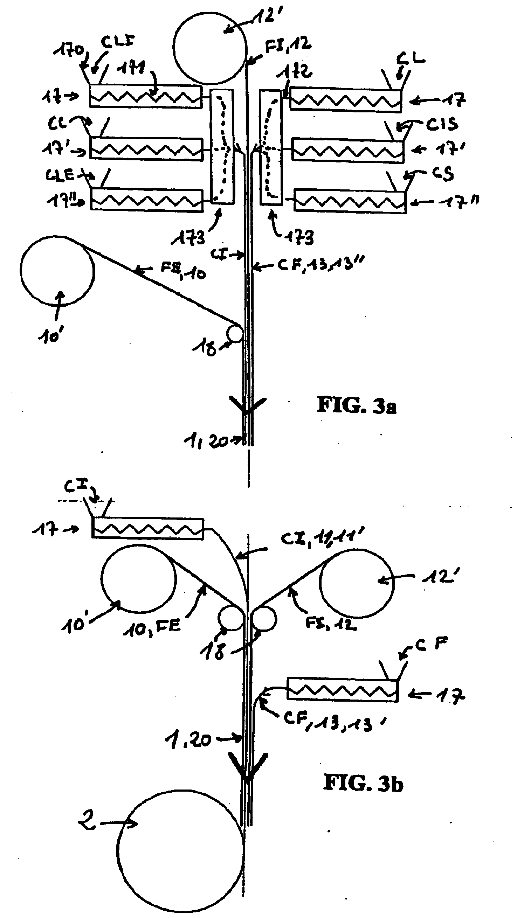

Les figures 3a et 3b sont des représentations schématiques en coupe qui illustrent, à titre d'exemple, deux modalités de fabrication de bobines (2) de films (1) dans le cas où la couche intermédiaire CI et la couche de fixation sont des couches extrudées ou co-extrudées. Les films extérieur (10) et intérieur (12) d'aluminium sont représentés sous forme de bobines notées (10') et (12').
La figure 3a représente la fabrication du film (1) de la figure 2a, sa structure étant représentée symboliquement par FE / CLE / CC / CLI / FI / CL / CIS / CS.
La figure 3b illustre une autre modalité de procédé de fabrication du film (1) de la figure 1a, représenté symboliquement par FE / CI / FI / CF.
La figure 4a est une vue en perspective d'une bande (20) de film (1) déroulée depuis une bobine (2), après découpe d'opercules (3, 30, 51) destinés à obturer un récipient ou de flans (80) destinés à former un récipient, typiquement une barquette, par emboutissage. La partie droite de ladite bande (20) correspond au squelette (21) de bande restant après
découpe des opercules (3, 30, 51). La figure 4b représente une pile (22) d'opercules (3, 30, 51) ou de flans (80) formés par découpe dans la bande (20) de la figure 4a. Les outils de découpe n'ont pas été représentés.
Les figures 4c à 4f illustrent des modalités d'opercules (3, 30, 31, 51) ou de flans (80) :
- opercules ou flans circulaires dans le cas des figures 4c et 4e, et opercules ou flans ovales dans le cas des figures 4d et 4f,
- opercules ou flans sans languette d'ouverture (312, 512) dans le cas des figures 4c et 4d, et opercules ou flans avec une languette d'ouverture (312, 512) dans le cas des figures 4e et 4f.

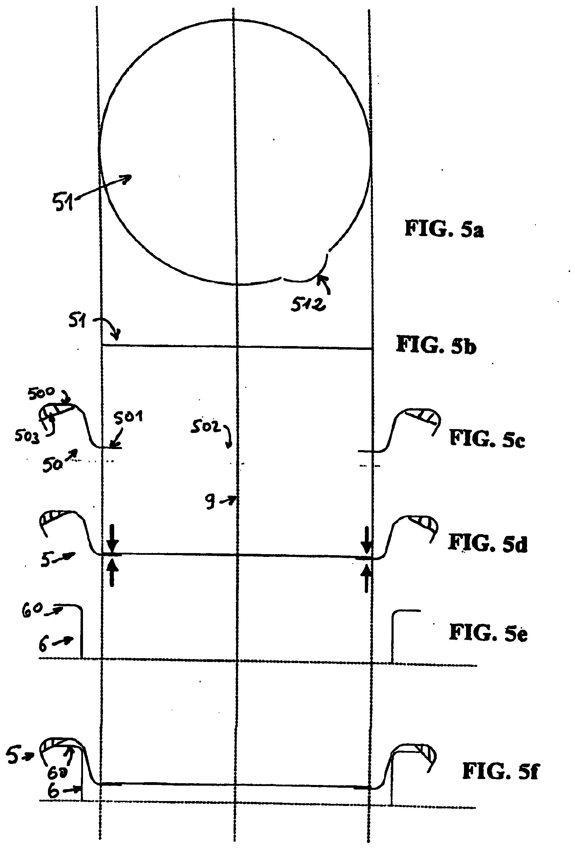

Les figures 5a à 6e illustrent le cas où ledit film (1) sert à former un couvercle composite (5) selon l'invention.

Les figures 5a à 6e sont des coupes axiales, sauf la figure 5a qui est une vue de dessus.
Les figures 5a à 5d illustrent la fabrication dudit couvercle composite (5) :

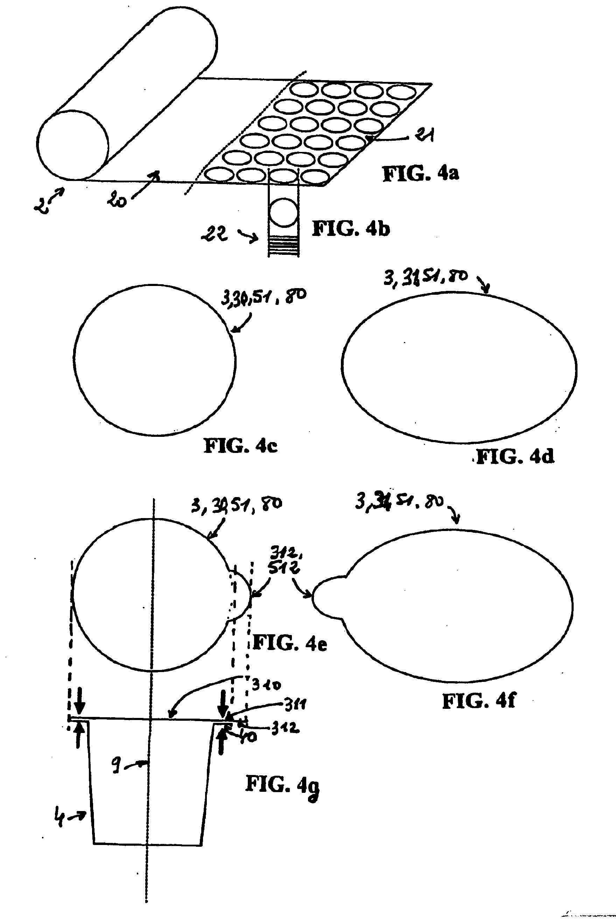

- les figures 5a et 5b sont des vues d'un opercule pelable (51) formé à partir du film (1), comme illustré sur les figures 4a et 4b,
- la figure 5c représente une bague métallique (50) comprenant à l'extérieur un crochet de sertissage (500), et une plage annulaire (501) délimitant une ouverture centrale (502),
   ledit crochet (500) comprenant typiquement un joint (503).
- la figure 5d représente, par deux paires de flèches, le thermoscellage de l'opercule (51) sur la plage annulaire (501) de la bague métallique (50), de manière à former ledit couvercle composite (5).
Les figures 5e à 6e illustrent l'utilisation dudit couvercle composite (5).
La figure 5e représente un corps de récipient (6) comprenant un rebord supérieur (60) destiné à être obturé par sertissage dudit couvercle composite (5).
La figure 5f représente ledit couvercle composite (5) placé sur le corps de récipient (6) avant sertissage.

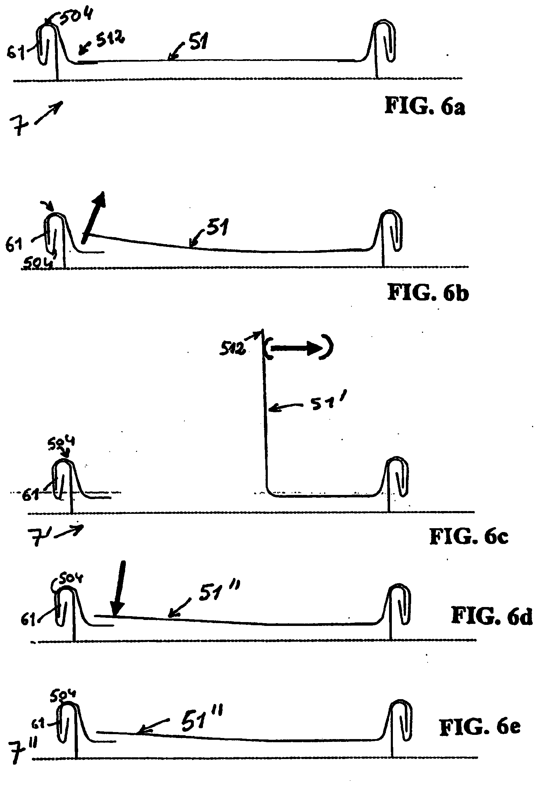

La figure 6a représente, après sertissage, ledit couvercle composite (5) serti au corps de récipient (6) en formant un crochet serti (504).
La figure 6b, analogue à la figure 6a, représente un début de première ouverture par un pelage manuel de l'opercule (51) représenté par une force ou une flèche appliquée sur la languette d'ouverture (512).
La figure 6c, analogue à la figure 6b, représente un opercule (51') à moitié ouvert, opercule qui reste dans sa position même lorsque la force de pelage a été supprimée (flèche entre parenthèses).
La figure 6d, analogue à la figure 6c, représente le cas où on rabat manuellement l'opercule à moitié ouvert (51'), de manière à obtenir un opercule en position "refermé" (51") grâce à un effort manuel représenté par une flèche.
La figure 6e, analogue à la figure 6d, illustre le fait que l'opercule (51") en position "refermé" conserve sa position même après suppression de l'effort manuel représenté sur la figure 6d.

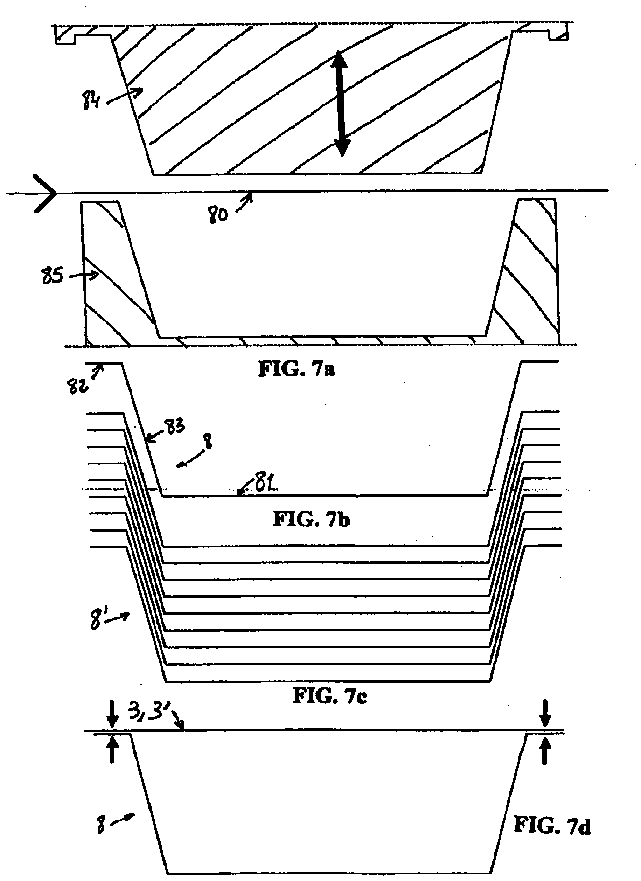

Les figures 7a à 7d illustrent, en coupe axiale, le cas où ledit film (1) sert à former des barquettes (8), typiquement des barquettes stérilisables.
La figure 7a est une vue schématique d'un dispositif de mise en forme, avec un flan (80) placé entre les outils de formage, à savoir un poinçon (84) et une matrice (85).
La figure 7b représente une barquette (8) et la figure 7c une pile (8') de barquettes (8). La figure 7d représente l'obturation d'une barquette (8) par thermoscellage d'un opercule, qui peut être un opercule selon l'invention (3) ou un autre opercule (3'), le thermoscellage étant représenté par une double paire de flèches.

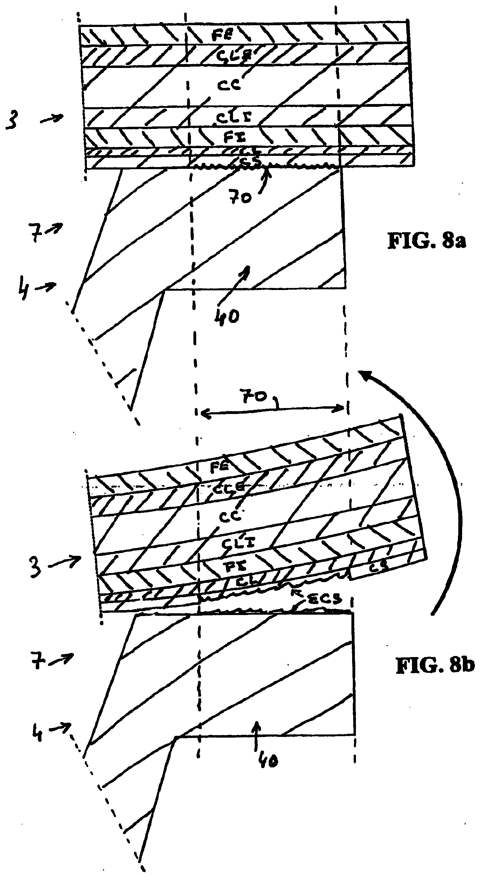

Les figures 8a, 9a, 10a et 11a illustrent, en coupe axiale partielle, quelques exemples d'opercules (3) ou de barquette (8) thermoscellés respectivement sur un récipient (4) ou sur un autre opercule (3') selon une plage de thermoscellage (70), représentée par la largeur du cordon de scellage entre deux traits verticaux en pointillés, pour former des récipients fermés (7).
Les figures correspondantes 8b, 9b, 10b et 11b illustrent une première ouverture par pelage des opercules (3, 31) selon différents modes de rupture de la couche de fixation (13).

Les figures 8a et 8b illustrent le cas où le film (1) de la figure 1c sert à former un opercule (3) obturant, comme support, un récipient (4) doté d'un rebord de scellage (40) en une matière plastique, par exemple en PP ou en PS, adaptée à la nature de la couche de fixation CF (13) et plus spécialement à la nature de la couche de scellage CS (131) de l'opercule (3).

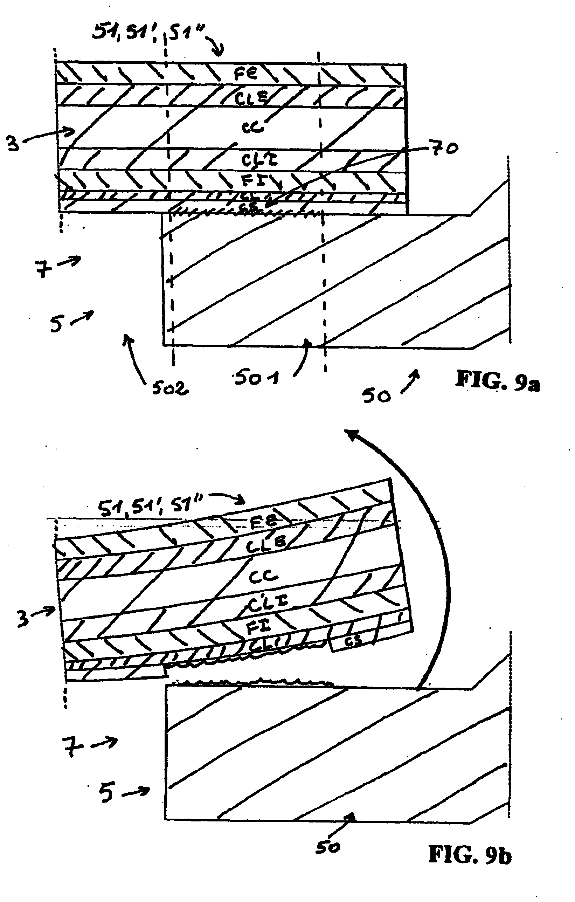

La figure 8b illustre le cas où le pelage de l'opercule (3) entraîne une rupture cohésive de la couche de, scellage CS. Les figures 9a et 9b illustrent le cas où le film (1) de la figure le sert à former un opercule (3) thermoscellé sur un support constitué par la plage annulaire (501) de la bague métallique (50), de manière à former un couvercle composite (5). Comme dans le cas de la figure 8b, la figure 9b illustre le cas, où le pelage entraîne une rupture cohésive de la couche de scellage CS.

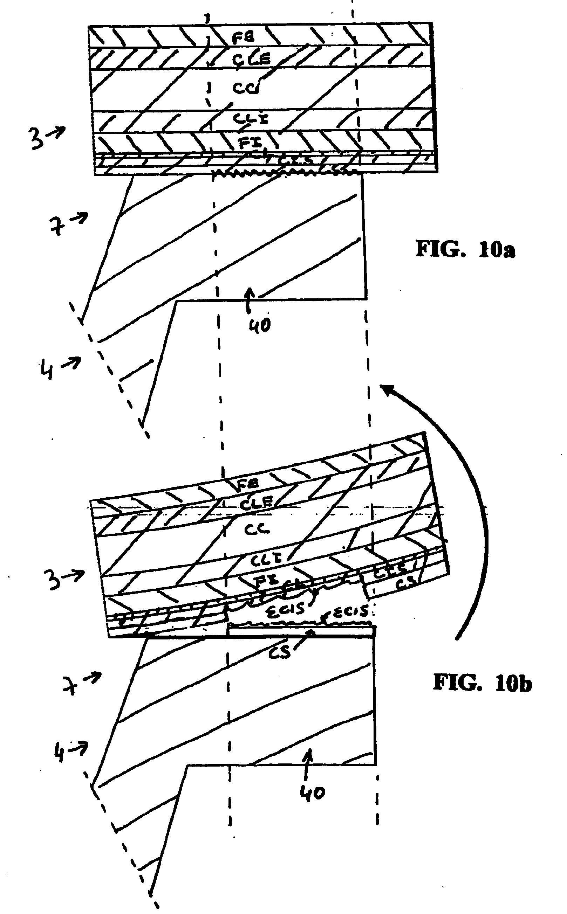

Les figures 10a et 10b sont analogues aux figures 8a et 8b. Elles en diffèrent en ce que le film présente la structure du film de la figure 2a (et non celui de la figure le), et en ce que le pelage de l'opercule (3) entraîne une rupture cohésive de la couche intermédiaire de scellage CIS (132).

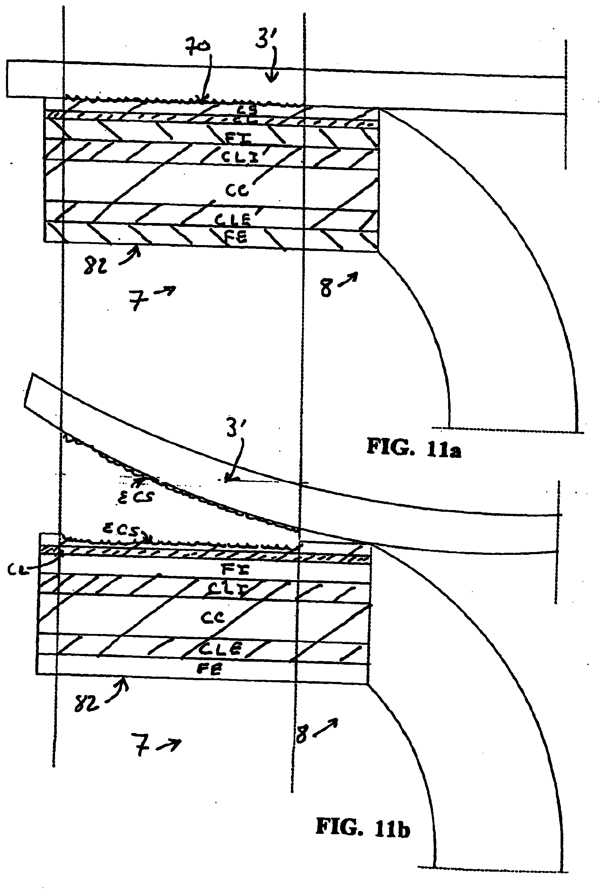

Les figures 11a et 11b illustrent le cas où le film (1) de la figure le sert à former une barquette emboutie (8) présentant un rebord de scellage (82) sur lequel a été thermoscellé un opercule (3') typiquement autre que celui de l'invention.
Dans ce cas, le rebord de l'opercule (3') forme ledit support.
Comme dans le cas de la figure 8b, la figure 11b illustre le cas où le pelage entraîne une rupture cohésive de la couche de scellage CS.

### DESCRIPTION DETAILLEE DE L'INVENTION

Hors invention, la couche intermédiaire (20), ou CI en abrégé, peut être une couche de colle permanente. Ce peut être aussi une couche de "hot-melt".

Selon l'invention, ladite couche intermédiaire (11) est une couche co-extrudée (11") de matière(s) thermoplastique(s), comme illustré sur les figures 3a et 3b.

Le film (1) de la figure la illustre le cas où ladite couche intermédiaire (11) est une couche extrudée (11'), tandis que celui de la figure 1b illustre le cas où ladite couche intermédiaire est une couche co-extrudée (11").
Avantageusement, et comme illustré sur la figure 1b, ladite couche intermédiaire (11) peut être une couche co-extrudée comprenant trois couches: une couche centrale (111) et deux couches de liaison aux films d'aluminium, une couche de liaison extérieure (110) pour solidariser ladite couche centrale (111) audit film extérieur d'aluminium (10), et une couche de liaison intérieure (112) pour solidariser ladite couche centrale (111) audit film intérieur d'aluminium (12).
Ladite couche centrale (111) peut être un PA, lesdites couches de liaison (110, 112) étant aptes à solidariser ladite couche de PA aux films extérieur et intérieur d'aluminium (10,12).

Selon la figure 1b, ladite couche de fixation (13) peut être une couche d'extrusion (13') en matière plastique.
Selon la figure 1c, ladite couche de fixation (13) peut être une couche de co-extrusion (13") en matière plastique comprenant une couche de scellage (131), par exemple une couche de scellage sur PP, et une couche de liaison (130) destinée à solidariser ladite couche de scellage (131) audit film intérieur d'aluminium (12).

Comme illustré sur la figure 2a, ladite couche de co-extrusion (13") selon l'invention comprend une couche intermédiaire de scellage (132) formant une couche barrière aux corps gras (132"), une couche en ou à base de PP, ladite couche intermédiaire de scellage (132) étant comprise entre ladite couche de liaison (130) et ladite couche de scellage (131).
Dans ce cas, comme illustré sur les figures 8b, 9b et 11b, ladite couche de scellage (131) peut comprendre du PP, du PE et une charge à l'état divisé, à une teneur pondérale dans ladite couche de scellage (131) allant de 1% à 15% en poids, de manière à former une couche pelable à rupture cohésive (131').

Selon l'invention, comme illustré sur la figure 10b, ladite couche de co-extrusion (13") comprend une couche intermédiaire de scellage (132) comprenant du PP et une charge à l'état divisé, à une teneur pondérale dans ladite couche intermédiaire de scellage allant de 1% à 15% en poids, de manière à former une couche pelable à rupture cohésive (132') .
Dans ce cas, ladite couche de scellage (131) peut forme une couche barrière aux corps gras (131"), par exemple une couche en ou à base de PP, apte à être fixée de manière permanente audit support typiquement en PP.
Dans la couche à rupture cohésive (131') ou (132'), ladite charge peut être une charge minérale, typiquement du talc ou de la silice, ou éventuellement une charge organique.

La demanderesse a observé qu'il était avantageux d'avoir dans ledit film (1) un moyen pour empêcher une migration de corps gras jusqu'à la surface du film intérieur d'aluminium (12). En effet, dans le cas contraire, elle a observé que ces corps gras pouvaient provoquer un délaminage entre ledit film intérieur d'aluminium (12) et ladite couche de fixation (13), délaminage qui peut avoir pour conséquence d'empêcher une ouverture correcte d'un récipient comprenant un opercule et/ou un corps de récipient formé à partir dudit film (1).

Typiquement, ladite couche de liaison (130) peut comprendre au moins une polyoléfine modifiée par des groupements acides ou anhydride, par exemple de l'anhydride maléique, ces polyoléfines modifiées sont aptes à adhérer à une couche d'aluminium et à une couche de matière thermoplastique.

Ladite couche de fixation (13) dudit film (1), ou ladite couche de scellage (131) de ladite couche de fixation (13), peut être une couche apte à être solidarisée à un support par thermoscellage.

Lesdits films extérieur (10) et intérieur (12) d'aluminium peuvent présenter une épaisseur de 6 à 50 µm, en particulier de 9 à 30 µm.

Comme illustré sur les figures 2b et 2c, ledit film extérieur d'aluminium (10) peut être recouvert par une laque ou vernis d'accrochage (14), et/ou une impression (15), ladite impression (15) étant par exemple protégée par un vernis de sur-impression (16).

Un autre objet de l'invention est constitué par des opercules pelables (3) formés par découpe du film (1) selon l'invention, et destinés à obturer des corps de récipients (4) typiquement stérilisables.
Ce peut être des opercules prédécoupés, sous forme de piles d'opercules, comme illustré sur les figures 4a à 4f.

Un autre objet de l'invention est constitué par des couvercles composite (5), destinés à obturer des corps de récipients typiquement stérilisables (6), couvercles composite (5) qui comprennent, comme illustré sur les figures 5a à 5d :
a) une bague métallique (50) dotée à sa périphérie d'un crochet de sertissage (500) apte à être serti au rebord supérieur (60) d'un corps de récipient (6) typiquement métallique, et sur sa partie intérieure d'une plage annulaire (501) entourant une ouverture centrale (502),
b) un opercule pelable (3,51) selon l'invention, ledit opercule (3, 51) comprenant une plage centrale (510) obturant ladite ouverture centrale (502) et une partie périphérique (511) solidarisée à ladite plage annulaire (501), typiquement par thermoscellage.
Comme illustré sur les figures 4e, 4f et 5a, ledit opercule (3, 51) peut comprendre une languette de préhension ou de première ouverture (512), solidaire de ladite partie périphérique (511), destinée faciliter une première ouverture dudit récipient par pelage dudit opercule (3, 51).

Dans ces couvercles (5) :
- ledit film extérieur d'aluminium (10) dudit opercule (3, 51) peut présenter une épaisseur allant de 15 µm à 25 µm, et typiquement une épaisseur de 20 µm,
- ladite couche intermédiaire (11) dudit opercule (3, 51) peut présenter un grammage allant de 20 g/m² à 30 g/m², et typiquement un grammage de 25 g/m²,
- ledit film intérieur d'aluminium (12) dudit opercule (3, 51) peut présenter une épaisseur allant de 8 µm à 15 µm, et typiquement une épaisseur de 12 µm,
- ladite couche de fixation (13) dudit opercule (3, 51) peut présenter un grammage allant de 5 g/m² à 30 g/m², et typiquement un grammage de 15 g/m².

Comme illustré sur les figures 7a à 7d, un autre objet de l'invention est constitué par des barquettes (8), par exemple des barquette stérilisables, formées par emboutissage de flans (80) découpés dans ledit film d'emballage (1) selon l'invention, lesdites barquettes (8) comprenant un fond (81), un rebord de scellage (82) et une paroi typiquement oblique (83).
Ces barquettes (8) peuvent présenter une profondeur H allant, par exemple, de 8 mm à 35 mm et une plus grande dimension D, typiquement pour ladite plage de scellage, allant de par exemple 30 min à 100 mm, de manière à avoir un rapport H/D au moins égal à 0,08, et typiquement compris entre 0,2 et 0,5.
Dans ces barquettes :
- ledit film extérieur d'aluminium (10) dudit film (1) peut présenter une épaisseur allant de 20 µm à 40 µm, et typiquement une épaisseur de 30 µm,
- ladite couche intermédiaire (11) dudit film (1) peut présenter un grammage allant de 20 g/m² à 40 g/m², et typiquement un gammage de 30 g/m²,
- ledit film intérieur d'aluminium dudit film (1) peut présenter une épaisseur allant de 20 µm à 40 µm, et typiquement une épaisseur de 30 µm,
- ladite couche de fixation dudit film (1) peut présenter un grammage allant de 5 g/m² à 30 g/m², et typiquement un grammage de 15 g/m².

Un autre objet de l'invention est constitué par des sachets stérilisables formés par pliage de portions de film (1) selon l'invention. Un tel sachet, rectangulaire, peut être formé par thermoscellage des bords parallèles latéraux, le fond étant formé par le pli de ladite portion de film (1), de manière à ce que les bords parallèles audit pli forment une ouverture de remplissage, lesdits bords parallèles étant thermoscellés après remplissage dudit sachet.
Dans ces sachets :
- ledit film extérieur d'aluminium (10) dudit film (1) peut présenter une épaisseur allant de 15 µm à 25 µm, et typiquement une épaisseur de 20 µm,
- ladite couche intermédiaire (11) dudit film (1) peut présenter un grammage allant de 20 g/m² à 30 g/m², et typiquement un grammage de 25 g/m²,
- ledit film intérieur d'aluminium (12) dudit film (1) peut présenter une épaisseur allant de 8 µm à 15 µm, et typiquement une épaisseur de 12 µm,
- ladite couche de fixation (113) dudit film (1) peut présenter un grammage allant de 5 g/m² à 30 g/m², et typiquement un grammage de 15 g/m².

Un autre objet de l'invention est constitué par un procédé de fabrication du film (1) selon l'invention.
Dans une modalité de ce procédé illustrée sur la figure 3a :
1) dans une première étape, on extrude de part et d'autre dudit film intérieur d'aluminium (12), ladite couche intermédiaire (11) sur une face dite externe dudit film intérieur (12), et ladite couche de fixation (13) sur l'autre face dite interne dudit film intérieur (12),
2) puis, dans une seconde étape, on applique sur ladite couche intermédiaire (11) ledit film extérieur d'aluminium (10), de manière à former ledit film d'emballage (1).

Dans une autre modalité illustrée sur la figure 3b :
1) dans une première étape, on extrude ladite couche intermédiaire (11) entre ledit film extérieur (10) et ledit film intérieur (12) d'aluminium,
2) puis, dans une seconde étape, on applique sur une face dite interne dudit film intérieur (12) ladite couche de fixation (13), de manière à former ledit film d'emballage (1).

De préférence, et quelle que soit la modalité de procédé, lesdites première et seconde étapes peuvent être réalisées en ligne, de manière à former ledit film d'emballage (1) avec une productivité élevée.

### EXEMPLES DE REALISATION

Toutes les figures correspondent à des exemples de réalisation. Les figures 2a, 2c, 3a, 4a à 7d et 10a à 10b sont relatives à l'invention.

### A) Les structures de films (1) fabriqués selon les figures la à 2c sont des exemples de réalisation. Ces structures ont été obtenues par le procédé de la figure 3a ou de la figure 3b.

Tous les films (1) fabriqués comprennent au moins la structure de couches de la figure 1a : FE / CI / FI / CF, sachant que de nombreuses autres combinaisons sont possibles en jouant sur :
a) l'extérieur de ce film (1) qui peut comprendre une impression IP, et éventuellement une couche de primaire ou d'accrochage VAC, ou encore une couche de protection de l'impression IP, typiquement une couche de vernis d'impression VSI,
b) la couche intermédiaire CI (11) du film (1) comprise entre les films extérieur FE (10) et intérieur FI (12) d'aluminium, qui peut être constitué par une couche adhésive, une couché extrudée (11') ou, selon l'invention, une couche co-extrudée (11"), ladite couche intermédiaire CI extrudée (11") ayant trois couches CLE / CC / CLI comme représenté sur la figure 1b,
c) la couche de fixation CF (13) du film (1), qui forme la couche intérieure dudit film (1), qui peut être une couche extrudée (13') ou co-extrudée (13"), ladite couche co-extrudée (13") à trois couches CL / CIS / CS comme représenté sur les figures 2a et 2c n'étant qu'un exemple de réalisation.

On a ainsi préparé les films suivants:

| Référence des films (1) | FE épaisseur E_{E} en µm* | CI grammage en g/m2 ** | FI épaisseur E_{I} en µm * | CF en g/m2 *** |
|---|---|---|---|---|
| A1 | 12 | 15 extrusion | 12 | 10 extrusion |

| Référence des films (1) | FE épaisseur E_{E} en (µm * | CI grammage en g/m2 ** | FI épaisseur E_{I} en µm * | CF en g/m2 *** |
|---|---|---|---|---|
| A2 | 12 | 20 co-extrusion | 18 | 15 co-extrusion 1 |
| A3 | 12 | 20 co-extrusion | 18 | 15 co-extrusion 2 |
| A4 | 20 | 15 extrusion | 20 | 10 extrusion |
| A5 | 25 | 20 co-extrusion | 25 | 15 co-extrusion 1 |
| A6 | 25 | 20 co-extrusion | 25 | 15 co-extrusion 2 |
| A7 | 30 | 25 extrusion | 30 | 15 extrusion |
| A8 | 40 | 25 co-extrusi on | 30 | 20 co-extrusion 1 |
| A9 | 40 | 25 co-extrusion | 30 | 20 co-extrusion 2 |
| * les films d'aluminium FE et FI sont en alliage d'aluminium de la série 1000 ou 8000 (nomenclaturé de l'AAA). | | | | |
| ** les couches CI d'extrusion (11') ont été choisies à base de PP comprenant des groupements acides carboxylique ou anhydride, à la teneur suffisante pour adhérer aux films FE et FI. | | | | |
| Les couches CI de co-extrusion (11") comprennent une couche CC en PA. | | | | |
| *** les couches CF d'extrusion (13') sont des couches de scellage aptes à assurer une rupture cohésive de ces couches lors d'une première ouverture. | | | | |

Les couches CF de co-extrusion (13") ont été formées selon une première modalité (co-extrusion 1) avec deux couches, une couche de liaison CL (130), à base de polyoléfine comprenant des groupements acides carboxyliques ou anhydride d'acide organique, et une couche de scellage CS (131) apte à assurer une rupture cohésive de cette couche lors d'une première ouverture.
Les couches CF de co-extrusion (13") ont été formées selon une seconde modalité (co-extrusion 2) avec trois couches, à savoir avec en plus une couche intermédiaire de scellage CIS (132).
Dans ce dernier cas, et selon une première variante dépendant des applications finales, ladite couche intermédiaire de scellage (132) est une couche à base de PP, de manière à former une couche barrière aux corps gras (132"), et ladite couche de scellage (131) comprend une charge minérale de manière à former une couche de scellage à rupture cohésive (131').
Selon une seconde variante, c'est ladite couche intermédiaire de scellage (132) qui comprend une charge minérale de manière à former une couche intermédiaire à rupture cohésive (132'), et ladite couche de scellage (131) est une couche à base de PP, de manière à former une couche barrière aux corps gras (131").

On a également fait des essais en utilisant un film extérieur FE (10) d'aluminium imprimé correspondant à la structure FE / VAC / IP / VSI, de manière à former un film d'emballage (1) imprimé.

### B) Produits formés à partir des films (1) A1 à A8

On a fabriqué les produits suivants :
B1 : des opercules (3) à partir des films A1 à A3 destinés à obturer des récipients ou des pots en matière plastique comme illustré sur la figure 4g, ces opercules étant obtenus par découpage dans ledit films (1) comme illustré sur les figures 4a et 4b.
B2 : des opercules (51), analogues aux opercules (3), mais destinés à former des couvercles composite (5) comme illustré sur les figures 5a à 5d.
B3 : des sachets à partir des films A1 à A6, typiquement des sachets stérilisables.
B4 : des barquettes (8) à partir des films A7 à A9, comme illustré sur les figures 7a à 7d.

### C) Résultats obtenus

D'une part, les films (1) et les produits sous B) formés à partir de ces films, comprenant deux films FE et FI d'aluminium selon l'invention permettent de réduire significativement l'épaisseur totale de l'aluminium E=E_{E}+E_{I}, ces films (1) étant destinés à remplacer des films comprenant une seule couche d'aluminium d'épaisseur E', car la demanderesse a observé qu'il était possible d'obtenir des caractéristiques mécaniques comparables avec deux couches d'aluminium d'épaisseur totale E < E', E/E' allant de 0,85 à 0,95 selon les domaines d'application, ce qui est considérable. D'autre part, ces films (1) présentent une très bonne aptitude au pliage et dépliage, comme illustré par exemple sur les figures 6c à 6e.
En outre, ces films (1) permettent d'obtenir des sachets, opercules, couvercles composite et barquettes aptes à être pasteurisés et même stérilisés, ce qui permet avantageusement de remplacer les boîtes de conserve traditionnelles par des récipients faciles à ouvrir car dotés d'un opercule pelable.
Enfin, ces films (1) peuvent, si besoin est, comprendre une barrière aux corps gras assurant que, durant le temps de stockage des produits conditionnés, temps qui peut être assez long et s'étendre éventuellement sur plusieurs années dans le cas de produits stérilisés, la lente migration des corps gras contenus dans les produits conditionnés ne va pas altérer l'interface entre ledit film intérieur FI d'aluminium (12) et ladite couche de fixation CF (13).

### LISTE DES REPERES

| | |
|---|---|
| Film d'emballage | 1 |
| Film extérieur d'aluminium FE | 10 |
| Bobine de 10 | 10' |
| Couche intermédiaire CI | 11 |
| Couche CI 11 extrudée, coextrudée | 11',11" |
| Couche de liaison extérieure CLE | 110 |
| Couche centrale CC | 111 |
| Couche de liaison intérieure CLI | 112 |
| Film intérieur d'aluminium FI | 12 |
| Bobine de 12 | 12' |
| Couche de fixation CF extrudée ou coextrudée | 13 |
| Couche d'extrusion | 13' |
| Couche de co-extrusion | 13" |
| Couche de liaison CL avec 12 | 130 |
| Couche de scellage CS | 131 |
| Couche de scellage CS à rupture cohésive | 131' |
| Couche de scellage CS barrière aux AG | 131" |
| Couche intermédiaire de scellage CIS | 132 |
| Couche intermédiaire CIS à rupture cohésive | 132' |
| Couche intermédiaire CIS barrière aux AG | 132" |
| Vernis d'accrochage VAC ou primaire | 14 |
| Impression IP | 15 |
| Vernis de surimpression VSI | 16 |
| Extrudeuse ou co-extrudeuse | 17,17', 17" |
| Trémie d'alimentation | 170 |
| Vis | 171 |
| Fente de sortie | 172 |
| Tête de co-extrusion | 173 |
| Rouleau de complexage | 18 |
| Bobine de 1 | 2 |
| Bande de 1 | 20 |
| Squelette de 20 après découpe de 3, 51 ou 80 | 21 |
| Pile de 3, 51 ou 80 | 22 |
| Opercules prédécoupés formés à partir de 1 | 3 |
| Autres opercules (pour 8) | 3' |
| Opercules ronds | 30 |
| Opercules de forme | 31 |
| Plage centrale | 310 |
| Partie périphérique | 311 |
| Languette d'ouverture | 312 |
| Récipient à obturer par 3 | 4 |
| Rebord de scellage de 4 | 40 |
| Couvercle composite | 5 |
| Bague métallique | 50 |
| Crochet de sertissage | 500 |
| Plage annulaire | 501 |
| Ouverture centrale | 502 |
| Joint | 503 |
| Crochet serti | 504 |
| Opercule pelable | 51,51',51" |
| Plage centrale | 510 |
| Partie périphérique | 511 |
| Languette d'ouverture | 512 |
| Corps de récipient (métallique) à obturer par 5 | 6 |
| Rebord supérieur | 60 |
| Rebord serti | 61 |
| Récipient formé par 4/6/8 fermé par 3/5/3' | 7 |
| Récipient "ouvert" | 7' |
| Récipient "refermé" | 7" |
| Plage de scellage | 70 |
| Barquette formée par emboutissage de 1 | 8 |
| Pile de barquettes 8 | 8' |
| Flans de 1 pour former 8 | 80 |
| Fond de 8 | 81 |
| Rebord de scellage | 82 |
| Paroi oblique | 83 |
| Poinçon | 84 |
| Matrice | 85 |
| Direction axiale | 9 |

## Revendications

1. Film d'emballage (1) comprenant un film de support à base de film d'aluminium et une couche de fixation permettant dans un premier temps de solidariser ledit film sur un support, puis, dans un second temps, de pouvoir séparer par pelage ledit film dudit support, dans lequel
1) ledit film de support se compose de deux films d'aluminium, un film extérieur (10) et un film intérieur (12), assemblés l'un à l'autre par une couche intermédiaire (11) de matière plastique,
2) lesdits films d'aluminium (1) présentent une épaisseur allant de 8 µm à 40 µm, ladite épaisseur allant par exemple de 8 µm à 25 µm dans le cas où ledit film (1) est destiné à former un opercule ou un matériau d'operculage (3, 51), ladite épaisseur allant par exemple de 20 µm à 40 µm dans le cas où ledit film est destiné à former une barquette (8), par exemple une barquette stérilisable,
3) ladite couche de fixation (13) est une couche de co-extrusion (13") en matière plastique comprenant une couche de scelllage (131) et une couche de liaison (130) destinée à solidariser ladite couche de scellage (131) audit film intérieur d'aluminium (12),
4) ladite couche intermédiaire (11) est une couche co-extrudée (11") de matière(s) thermoplastique(s),
5) ladite couche co-extrudée (11") comprend trois couches: une couche centrale (111) et deux couches de liaison aux films d'aluminium, une couche de liaison extérieure (110) pour solidariser ladite couche centrale (111) audit film extérieur d'aluminium (10), et une couche de liaison intérieure (112) pour solidariser ladite couche centrale (111) audit film intérieur d'aluminium,
charactérisé en ce que
ladite couche de co-extrusion (13") comprend une couche intermédiaire de scellage (132) en ou à base de PP formant une couche barrière aux corps gras (132"), ladite couche intermédiaire de scellage (132) étant comprise entre ladite couche de liaison (130) et ladite couche de scellage (131).

2. Film selon la revendication 1 dans lequel ladite couche de scellage (131) comprend du PP, du PE et une charge à l'état divisé, à une teneur pondérale dans ladite couche de scellage (131) allant de 1% à 15% en poids, de manière à former une couche pelable à rupture cohésive (131').

3. Film d'emballage selon la revendication 1 ou 2 dans lequel ladite couche de co-extrusion (13") comprend une couche intermédiaire de scellage (132) comprenant du PP et une charge à l'état divisé, à une teneur pondérale dans ladite couche intermédiaire de scellage allant de 1% à 15% en poids, de manière à former une couche pelable à rupture cohésive (132').

4. Film d'emballage selon la revendication 1 à 3 dans lequel ladite couche de scellage (131) forme une couche barrière aux corps gras (131"), par exemple une couche en ou à base de PP, apte à être fixée de manière permanente audit support typiquement en PP.

5. Film d'emballage selon une quelconque des revendications 3 à 4 dans lequel ladite charge est une charge minérale, typiquement du talc ou de la silice, ou éventuellement une charge organique.

6. Film d'emballage selon une quelconque des revendications 1 à 5 dans lequel ladite couche de liaison (130) comprend au moins une polyoléfine modifiée par des groupements acides ou anhydride, par exemple de l'anhydride maléique.

7. Film d'emballage selon l'une quelconque des revendications 1 à 6 dans lequel ladite couche de fixation (13), ou ladite couche de scellage (131) de ladite couche de fixation (13), est une couche apte à être solidarisée à un support par thermoscellage.

8. Film d'emballage selon l'une quelconque des revendications 1 à 7 dans lequel ladite couche centrale (111) est un PA, lesdites couches de liaison (110, 112) étant aptes à solidariser ladite couche PA aux films extérieur et intérieur d'aluminium (10, 12).

9. Film d'emballage selon une quelconque des revendications 1 à 8 dans lequel ledit film extérieur d'aluminium (10) est recouvert par une laque ou vernis d'accrochage (14), et/ou une impression (15), ladite impression (15) étant par exemple protégée par un vernis de surimpression (16).

10. Opercules pelables (3) formés par découpe du film (1) selon une quelconque des revendications 1 à 9, destinés à obturer des corps de récipients typiquement stérilisables.

11. Couvercles composite (5), destinés à obturer des corps de récipients typiquement stérilisables (6), comprenant:
a) une bague métallique (50) dotée à sa périphérie d'un crochet de sertissage (500) apte à être serti au rebord supérieur (60) d'un corps de récipient (6) typiquement métallique, et sur sa partie intérieure d'une plage annulaire (501) entourant une ouverture centrale (502),
b) un opercule pelable (3, 51) selon la revendication 10, ledit opercule (3, 51) comprenant une plage centrale (510) obturant ladite ouverture centrale (502) et une partie périphérique (511) solidarisée à ladite plage annulaire (501), typiquement par thermoscellage.

12. Couvercles (5) selon la revendication 11 dans lequel ledit opercule (3, 51) comprend une languette de préhension ou de première ouverture (512), solidaire de ladite partie périphérique (511), destinée faciliter une première ouverture dudit récipient par pelage dudit opercule (3, 51).

13. Couvercles (5) selon une quelconque des revendications 11 à 12 dans lesquels:
- ledit film extérieur d'aluminium (10) dudit opercule (3, 51) présente une épaisseur allant de 15 µm à 25 µm, et typiquement une épaisseur de 20 µm,
- ladite couche intermédiaire (11) dudit opercule (3, 51) présente un grammage allant de 20 g/m² à 30 g/m², et typiquement un grammage de 25 g/m²,
- ledit film intérieur d'aluminium (12) dudit opercule (3, 51) présente une épaisseur allant de 8 µm à 15 µm, et typiquement une épaisseur de 12 µm,
- ladite couche de fixation (13) dudit opercule (3, 51) présente un grammage allant de 5 g/m² à 30 g/m², et typiquement un grammage de 15 g/m².

14. Barquettes (8), par exemple des barquette stérilisables, formées par emboutissage de flans (80) découpés dans ledit film d'emballage (1) selon une quelconque des revendications 1 à 9, comprenant un fond (81), un rebord de scellage (82) et une paroi typiquement oblique (83).

15. Barquettes (8) selon la revendication 14 présentant une profondeur H allant, par exemple, de 8 mm à 35 mm et une plus grande dimension D, typiquement pour ladite plage de scellage, allant de par exemple 30 mm à 100 mm, de manière à avoir un rapport H/D au moins égal à 0,08, et typiquement compris entre 0,2 et 0,5.

16. Barquettes selon une quelconque des revendications 14 à 15 dans lesquelles:
- ledit film extérieur d'aluminium (10) dudit film (1) présente une épaisseur allant de 20 µm à 40 µm, et typiquement une épaisseur de 30 µm,
- ladite couche intermédiaire (11) dudit film (1) présente un grammage allant de 20 g/m² à 40 g/m², et typiquement un grammage de 30 g/m²,
- ledit film intérieur d'aluminium dudit film (1) présente une épaisseur allant de 20 µm à 40 µm, et typiquement une épaisseur de 30 µm,
- ladite couche de fixation dudit film (1) présente un grammage allant de 5 g/m² à 30 g/m², et typiquement un grammage de 15 g/m².

17. Sachets stérilisables formés par pliage de portions de film selon une quelconque des revendications 1 à 9.

18. Sachets selon la revendication 17 dans lesquels:
- ledit film extérieur d'aluminium (10) dudit film (1) présente une épaisseur allant de 15 µm à 25 µm, et typiquement une épaisseur de 20 µm,
- ladite couche intermédiaire (11) dudit film (1) présente un grammage allant de 20 g/m² à 30 g/m², et typiquement un grammage de 25 g/m²,
- ledit film intérieur d'aluminium (12) dudit film (1) présente une épaisseur allant de 8 µm à 15 µm, et typiquement une épaisseur de 12 µm.
- ladite couche de fixation (13) dudit film (1) présente un grammage allant de 5 g/m² à 30 g/m², et typiquement un grammage de 15 g/m².

19. Procédé de fabrication du film (1) selon une quelconque des revendications 1 à 9 dans lequel:
1) dans une première étape, on extrude de part et d'autre dudit film intérieur d'aluminium (12), ladite couche intermédiaire (11) sur une face dite externe dudit film intérieur (12), et ladite couche de fixation (13) sur l'autre face dite interne dudit film intérieur (12),
2) puis, dans une seconde étape, on applique sur ladite couche intermédiaire (11) ledit film extérieur d'aluminium (10), de manière à former ledit film d'emballage (1).

20. Procédé de fabrication du film selon une quelconque des revendications 1 à 9 dans lequel:
1) dans une première étape, on extrude ladite couche intermédiaire (11) entre ledit film extérieur (10) et ledit film intérieur (12) d'aluminium,
2) puis, dans une seconde étape, on applique sur une face dite interne dudit film intérieur (12) ladite couche de fixation (13), de manière à former ledit film d'emballage (1).

21. Procédé selon une quelconque des revendications 19 à 20 dans lequel lesdites première et seconde étapes sont réalisées en ligne, de manière à former ledit film d'emballage (1) avec une productivité élevée.

## Patentansprüche

1. Verpackungsfolie (1), die eine Trägerfolie auf der Basis einer Aluminiumfolie sowie eine Befestigungsschicht umfasst, welche es ermöglicht, die Folie zunächst an einem Träger zu befestigen und sie dann vom Träger abschälen zu können, wobei
1) die Trägerfolie aus zwei Aluminiumfolien besteht, einer äußeren Folie (10) und einer inneren Folie (12), die über eine Zwischenschicht (11) aus Kunststoff miteinander verbunden sind,
2) die Aluminiumfolien (1) eine Dicke von 8 µm bis 40 µm aufweisen, bei der die Dicke zum Beispiel von 8 µm bis 25 µm reicht, wenn die Folie (1) dazu bestimmt ist, eine Deckfolie oder ein Deckfolienmaterial (3, 51) zu bilden, und zum Beispiel von 20 µm bis 40 µm reicht, wenn die Folie (1) zur Bildung einer Verpackungsschale (8), zum Beispiel einer sterilisierbaren Verpackungsschale vorgesehen ist,
3) die Befestigungsschicht (13) eine Coextrusionsschicht (13") aus Kunststoff ist, die eine Siegelschicht (131) und eine Verbindungsschicht (130) zur Verbindung der Siegelschicht (131) mit der inneren Aluminiumfolie (12) aufweist,
4) die Zwischenschicht (11) eine coextrudierte Schicht (11") aus Kunststoff oder Kunststoffen ist,
5) die coextrudierte Schicht (11") drei Schichten aufweist: eine zentrale Schicht (111) und zwei Schichten zur Verbindung mit den Aluminiumfolien, nämlich eine äußere Verbindungsschicht (110) zur Verbindung der zentralen Schicht (111) mit der äußeren Aluminiumfolie (10) und eine innere Verbindungsschicht (112) zur Verbindung der zentralen Schicht (111) mit der inneren Aluminiumfolie (12),
**dadurch gekennzeichnet, dass**
die Coextrusionsschicht (13") eine zwischenliegende Siegelschicht (132) aus oder auf der Basis von PP umfasst, die eine Barriereschicht für Fette (132") bildet, wobei sich diese Siegelschicht (132) zwischen der Verbindungsschicht (130) und der Siegelschicht (131) befindet.

2. Verpackungsfolie nach Anspruch 1, bei der die Siegelschicht (131) PP, PE und eine Beimengung mit einem Gewichtsanteil in der Siegelschicht (131) von 1 bis 15 Gew.% aufweist, um eine abschälbare Schicht mit Kohäsionsbruch (131') zu bilden.

3. Verpackungsfolie nach Anspruch 1 oder 2, bei der die Coextrusionsschicht (13") eine zwischenliegende Siegelschicht (132) umfasst, die PP und eine Beimengung mit einem Gewichtsgehalt in dieser zwischenliegenden Siegelschicht (132) von 1 bis 15 Gew.-% aufweist, um eine abschälbare Schicht mit Kohäsionsbruch (132') zu bilden.

4. Verpackungsfolie nach einem der Ansprüche 1 bis 3, bei der die Siegelschicht (131) eine Barriereschicht für Fette (131") bildet, zum Beispiel eine Schicht aus oder auf der Basis von PP, die an dem typischerweise aus PP bestehenden Träger permanent befestigbar ist.

5. Verpackungsfolie nach einem der Ansprüche 3 bis 4, bei der die Beimengung eine mineralische Beimengung, typischerweise Talkum oder Siliciumdioxid, oder eventuell eine organische Beimengung ist.

6. Verpackungsfolie nach einem der Ansprüche 1 bis 5, bei der die Verbindungsschicht (130) mindestens ein mit Säuregruppen modifiziertes Polyolefin oder Anhydrid aufweist, zum Beispiel ein Maleinsäureanhydrid.

7. Verpackungsfolie nach einem der Ansprüche 1 bis 6, bei der die Befestigungsschicht (13), oder die Siegelschicht (131) der Befestigungsschicht (13) eine durch Heisssiegeln mit einem Träger verbindbare Schicht ist.

8. Verpackungsfolie nach einem der Ansprüche 1 bis 7, bei der die zentrale Schicht (111) ein PA ist und die Verbindungsschichten (110, 112) geeignet sind, die PA-Schicht mit der äußeren und der inneren Aluminiumfolie (10, 12) zu verbinden.

9. Verpackungsfolie nach einem der Ansprüche 1 bis 8, bei der die äußere Aluminiumfolie (10) mit einem Lack oder Haftungslack (14) und/oder einem Aufdruck (15) versehen ist, wobei der Aufdruck (15) beispielsweise mit einem Drucküberlack (16) geschützt ist.

10. Abschälbare Deckfolien (3), die durch Zuschneiden der Folie (1) nach einem der Ansprüche 1 bis 9 gebildet werden und zum Verschliessen von typischerweise sterilisierbaren Behältern bestimmt sind.

11. Verbunddeckel (5) zum Verschließen von typischerweise sterilisierbaren Behältern (6), umfassend:
a) einen Metallring (50), der umfangsseitig mit einer Bördelung (500) zum Crimpen an den oberen Rand (60) eines typischerweise metallischen Behälters (6) versehen ist und an seinem inneren Teil einen ringförmigen Bereich (501) aufweist, der eine zentrale Öffnung (502) umgibt,
b) eine abschälbare Deckfolie (3, 51) nach Anspruch 10, wobei die Deckfolie (3, 51) einen die zentrale Öffnung (502) verschliessenden zentralen Bereich (510) sowie einen Randbereich (511) aufweist, der mit dem ringförmigen Bereich (501) typischerweise durch Heisssiegeln verbunden ist.

12. Deckel (5) nach Anspruch 11, bei denen die Deckfolie (3, 51) eine mit dem Randbereich (511) fest verbundene Greif- oder Erstöffnungslasche (512) aufweist, die dazu bestimmt ist, eine Erstöffnung des Behälters durch Abschälen der Deckfolie (3, 51) zu erleichtern.

13. Deckel (5) nach einem der Ansprüche 11 bis 12, bei denen:
- die äußere Aluminiumfolie (10) der Deckfolie (3, 51) eine Dicke von 15 µm bis 25 µm und typischerweise eine Dicke von 20 µm aufweist,
- die Zwischenschicht (11) der Deckfolie (3, 51) ein Flächengewicht von 20 g/m² bis 30 g/m² und typischerweise ein Flächengewicht von 25 g/m² aufweist,
- die innere Aluminiumfolie (12) der Deckfolie (3, 51) eine Dicke von 8 µm bis 15 µm und typischerweise eine Dicke von 12 µm aufweist,
- die Befestigungsschicht (13) der Deckfolie (3, 51) ein Flächengewicht von 5 g/m² bis 30 g/m² und typischerweise ein Flächengewicht von 15 g/m² aufweist.

14. Verpackungsschalen (8), zum Beispiel sterilisierbare Verpackungsschalen, die durch Tiefziehen von Zuschnitten (80) aus der Verpackungsfolie (1) nach einem der Ansprüche 1 bis 9 gebildet werden und die einen Boden (81), einen Siegelungsrand (82) und eine typischerweise schräge Wand (83) aufweisen.

15. Verpackungsschalen (8) nach Anspruch 14, mit einer Tiefe H von beispielsweise 8 mm bis 35 mm und einer größten Abmessung D, typischerweise für den Siegelbereich, von beispielsweise 30 mm bis 100 mm, um ein Verhältnis H/D von mindestens 0,08 und typischerweise von 0,2 bis 0,5 zu haben.

16. Verpackungsschalen nach einem der Ansprüche 14 bis 15, bei denen:
- die äußere Aluminiumfolie (10) der Folie (1) eine Dicke von 20 µm bis 40 µm und typischerweise eine Dicke von 30 µm aufweist,
- die Zwischenschicht (11) der Folie (1) ein Flächengewicht von 20 g/m² bis 40 g/m² und typischerweise ein Flächengewicht von 30 g/m² aufweist,
- die innere Aluminiumfolie (12) der Folie (1) eine Dicke von 20 µm bis 40 µm und typischerweise eine Dicke von 30 µm aufweist,
- die Befestigungsschicht (13) der Folie (1) ein Flächengewicht von 5 g/m² bis 30 g/m² und typischerweise ein Flächengewicht von 15 g/m² aufweist.

17. Sterilisierbare Beutel, die durch Falten von Abschnitten einer Folie nach einem der Ansprüche 1 bis 9 gebildet werden.

18. Beutel nach Anspruch 17, bei denen:
- die äußere Aluminiumfolie (10) der Folie (1) eine Dicke von 15 µm bis 25 µm und typischerweise eine Dicke von 20 µm aufweist,
- die Zwischenschicht (11) der Folie (1) ein Flächengewicht von 20 g/m² bis 30 g/m² und typischerweise ein Flächengewicht von 25 g/m² aufweist,
- die innere Aluminiumfolie (12) der Folie (1) eine Dicke von 8 µm bis 15 µm und typischerweise eine Dicke von 12 µm aufweist,
- die Befestigungsschicht (13) der Folie (1) ein Flächengewicht von 5 g/m² bis 30 g/m² und typischerweise ein Flächengewicht von 15 g/m² aufweist.

19. Verfahren zur Herstellung der Folie (1) nach einem der Ansprüche 1 bis 9, bei dem:
1) in einem ersten Schritt beiderseits der inneren Aluminiumfolie (12) die Zwischenschicht (11) auf eine sogenannte Außenseite der inneren Folie (12) und die Befestigungsschicht (13) auf die andere, die sogenannte Innenseite der Innenfolie (12) extrudiert wird,
2) und dann in einem zweiten Schritt die äußere Aluminiumfolie (10) auf die Zwischenschicht (11) aufgebracht wird, um eine Verpackungsfolie (1) zu bilden.

20. Verfahren zur Herstellung der Folie (1) nach einem der Ansprüche 1 bis 9, bei dem:
1) in einem ersten Schritt die Zwischenschicht (11) zwischen die äußere (10) und die innere Aluminiumfolie (12) extrudiert wird,
2) und dann in einem zweiten Schritt die Befestigungsschicht (13) auf eine sogenannte Innenseite der inneren Folie (12) aufgebracht wird, um die Verpackungsfolie (1) zu bilden.

21. Verfahren nach einem der Ansprüche 19 bis 20, bei dem der erste und zweite Schritt inline durchgeführt werden, um den Verpackungsfilm (1) mit hoher Produktivität herzustellen.

## Claims

1. Packaging film (1) comprising a support film based on aluminium film and a fixing layer making it possible first to secure said film to a support and then, secondly, to be able to separate said film from said support by peeling, wherein
1) said support film is composed of two aluminium films, an outer film (10) and an inner film (12), connected to each other by an intermediate layer (11) of plastics material,
2) said aluminium films (1) have a thickness ranging from 8 µm to 40 µm, said thickness ranging for example from 8 µm to 25 µm in the case where said film (1) is intended to form a cap or a capping material (3, 51), said thickness ranging for example from 20 µm to 40 µm in the case where said film is intended to form a tray (8), for example a sterilisable tray,
3) said fixing layer (13) is a co-extrusion layer (13") made from plastics material comprising a sealing layer (131) and a connecting layer (130) intended to fix said sealing layer (131) to said inner aluminium film (12),
4) said intermediate layer (11) is a co-extruded layer (11") of thermoplastic material or materials,
5) said co-extruded layer (11") comprises three layers: a middle layer (111) and two layers for connection to the aluminium films, an outer connecting layer (110) for fixing said middle layer (111) to said outer aluminium film (10), and an inner connecting layer (112) for fixing said middle layer (111) to said inner aluminium film,
**characterised in that**
said co-extrusion layer (13") comprises an intermediate sealing layer (132) made from or based on PP forming a barrier layer to fats (132"), said intermediate sealing layer (132) being included between said connecting layer (130) and said sealing layer (131).

2. Packaging film according to claim 1, in which said sealing layer (131) comprises PP, PE and a filler in the divided state, at a proportion by weight in said sealing layer (131) ranging from 1% to 15% by weight, so as to form a peelable layer with cohesive rupture (131').

3. Packaging film according to claim 1 or 2, in which said co-extrusion layer (13") comprises an intermediate sealing layer (132) comprising PP and a filler in the divided state, at a proportion by weight in said intermediate sealing layer ranging from 1% to 15% by weight, so as to form a peelable layer with cohesive rupture (132').

4. Packaging film according to any one of claims 1 to 3, in which said sealing layer (131) forms a barrier layer to fats (131"), for example a layer made from or based on PP, able to be fixed permanently to said support, typically made from PP.

5. Packaging film according to either one of claims 3 to 4 in which said filler is a mineral filler, typically talc or silica, or optionally an organic filler.

6. Packaging film according to any one of claims 1 to 5, in which said connecting layer (130) comprises at least one polyolefin modified by acid or anhydride groups, for example maleic anhydride.

7. Packaging film according to any one of claims 1 to 6, in which said fixing layer (13), or said sealing layer (131) of said fixing layer (13), is a layer able to be fixed to a support by heat sealing.

8. Packaging film according to any one of claims 1 to 7, in which said middle layer (111) is a PA, said connecting layers (110, 112) being able to fix said layer of PA to the outer and inner aluminium films (10, 12).

9. Film according to any one of claims 1 to 8, in which said outer aluminium film (10) is covered with a bonding lacquer or varnish (14), and/or printing (15), said printing (15) being for example protected by an overprint varnish (16).

10. Peelable lids (3) formed by cutting the film (1) according to any one of claims 1 to 9, intended to close bodies of typically sterilisable receptacles.

11. Composite covers (5), intended to close bodies of typically sterilisable receptacles (6) comprising:
a) a metal ring (50) provided at its periphery with a crimping hook (500) able to be crimped to the top rim (60) of a typically metal receptacle body (6), and on its inner part with an annular area (501) surrounding a central opening (502),
b) a peelable lid (3, 51) according to claim 10, said lid (3, 51) comprising a central area (510) closing said central opening (502) and a peripheral part (511) fixed to said annular area (501), typically by heat sealing.

12. Covers (5) according to claim 11, in which said lid (3, 51) comprises a gripping or first-opening tongue (512), fixed to said peripheral part (511), intended to facilitate a first opening of said receptacle by peeling said lid (3, 51).

13. Covers (5) according to any one of claims 11 to 12, in which:
- said outer aluminium film (10) of said lid (3, 51) has a thickness ranging from 15 µm to 25 µm, and typically a thickness of 20 µm,
- said intermediate layer (11) of said lid (3, 51) has a GSM ranging from 20 g/m² to 30 g/m², and typically a GSM of 25 g/m²,
- said inner aluminium film (12) of said lid (3, 51) has a thickness ranging from 8 µm to 15 µm, and typically a thickness of 12 µm,
- said fixing layer (13) of said lid (3, 51) has a GSM ranging from 5 g/m² to 30 g/m², and typically a GSM of 15 g/m².

14. Trays (8), for example sterilisable trays, formed by pressing blanks (80) cut from said packaging film (1) according to any one of claims 1 to 9, comprising a bottom (81), a sealing rim (82) and a typically oblique wall (83).

15. Trays (8) according to claim 14, having a depth H ranging, for example, from 8 mm to 35 mm and a largest dimension D, typically for said sealing area, ranging for example from 30 mm to 100 mm, so as to have an H/D ratio of at least 0.08, and typically between 0.2 and 0.5.

16. Trays according to any one of claims 14 to 15, in which:
- said outer aluminium film (10) of said film (1) has a thickness ranging from 20 µm to 40 µm, and typically a thickness of 30 µm,
- said intermediate layer (11) of said film (1) has a GSM ranging from 20 g/m² to 40 g/m², and typically a GSM of 30 g/m²,
- said inner aluminium film of said film (1) has a thickness ranging from 20 µm to 40 µm, and typically a thickness of 30 µm,
- said fixing layer of said film (1) has a GSM ranging from 5 g/m² to 30 g/m², and typically a GMS of 15 g/m².

17. Sterilisable sachets formed by folding portions of film according to any one of claims 1 to 9.

18. Sachets according to claim 17, in which:
- said outer aluminium film (10) of said film (1) has a thickness ranging from 15 µm to 25 µm, and typically a thickness of 20 µm,
- said intermediate layer (11) of said film (1) has a GSM ranging from 20 g/m² to 30 g/m², and typically a GSM of 25 g/m²,
- said inner aluminium film (12) of said film (1) may have a thickness ranging from 8 µm to 15 µm, and typically a thickness of 12 µm,
- said fixing layer (13) of said film (1) may have a GSM ranging from 5 g/m² to 30 g/m², and typically a GMS of 15 g/m².

19. Method for manufacturing the film (1) according to any one of claims 1 to 9, in which:
1) in a first step, there are extruded, on either side of said inner aluminium film (12), said intermediate layer (11) on a so-called external face of said inner film (12), and said fixing layer (13) on the other so-called internal face of said inner film (12),
2) then, in a second step, said outer aluminium film (10) is applied to said intermediate layer (11) so as to form said packaging film (1).

20. Method for manufacturing the film according to any one of claims 1 to 9, in which:
1) in a first step, said intermediate layer (11) is extruded between said outer film (10) and said inner film (12) of aluminium,
2) then, in a second step, said fixing layer (13) is applied to a so-called internal face of said inner film (12) so as to form said packaging film (1).

21. Method according to any one of claims 19 to 20, in which said first and second steps are performed on a production line, so as to form said packaging film (1) with high productivity.
